(19) Europäisches Patentamt
European Patent Office
Office européen des brevets

(11) Publication number: **0 060 056**
**B1**

(12) **EUROPEAN PATENT SPECIFICATION**

(45) Date of publication of the patent specification: **25.04.84**

(51) Int. Cl.³: **A 01 N 47/12,** A 01 N 25/32 // (A01N47/12, 33/22)

(21) Application number: **82300943.6**

(22) Date of filing: **24.02.82**

(54) **Use of dinitrophenol compounds as herbicide antidotes, compositions containing the antidotes and seed coated therewith.**

(30) Priority: **27.02.81 US 238915**

(43) Date of publication of application: **15.09.82 Bulletin 82/37**

(45) Publication of the grant of the patent: **25.04.84 Bulletin 84/17**

(84) Designated Contracting States: **AT BE CH DE FR GB IT LI NL SE**

(56) References cited:
**DE - A - 1 073 796**
**FR - A - 1 159 289**
**GB - A - 425 295**
**US - A - 3 822 357**

(73) Proprietor: **STAUFFER CHEMICAL COMPANY, Westport Connecticut 06880 (US)**

(72) Inventor: **Gray, Reed Alden, 19327 Portos Court, Saratoga California 95070 (US)**

(74) Representative: **Smith, Sydney et al, Elkington and Fife High Holborn House 52/54 High Holborn, London WC1V 6SH (GB)**

EP 0 060 056 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Use of dinitrophenol compounds as herbicide antidotes, compositions containing the antidotes and seed coated therewith

This invention relates to the use of certain dinitrophenol compounds as herbicide antidotes and to compositions containing said herbicides.

A herbicide is a compound which controls or modifies plant growth, e.g. killing, retarding, defoliating, desiccating, regulating, stunting, tillering, stimulating, and dwarfing. The term »plant« refers to all physical parts of a plant, including seeds, seedlings, saplings, roots, tubers, stems, stalks, foliage, and fruits. »Plant growth« includes all phases of development from seed germination to natural or induced cessation of life.

Herbicides are generally used to control or eradicate weed pests. They have gained a high degree of commercial succes because it has been shwon that such control can increase crop yield and reduce harvesting costs.

The most popular methods of herbicide application include: pre-plant incorporation into the soil; in-furrow application to seeds and surrounding soil; pre-emergence surface treatment of seeded soil; and post-emergence treatment of the plant and soil.

A manufacturer of an herbicide generally recommends a range of application rates and concentrations calculated to maximize weed control. The range of rates varies from approximately 0.01 to 50 pounds per acre (0.0112 to 56 kilograms per hectare [kg/ha]), and is usually in the range of from 0.1 to 25 pounds per acre (0.112 to 28 kg/ha). The term »herbicidally effective amount« describes the amount of an herbicide compound which controls or modifies plant growth. The actual amount used depends upon several considerations, including particular weed susceptibility and overall cost limitations.

The most important factor influencing the usefulness of a given herbicide is its selectivity towards crops. In some cases, a beneficial crop is susceptible to the effects of the herbicide. In addition, certain herbicidal compounds are phytotoxic to some weed species but not to others. To be effective, an herbicide must cause minimal damage (preferably no damage) to the beneficial crop while maximizing damage to weed species which plague that crop.

To preserve the beneficial aspects of herbicide use and to minimize crop damage, many herbicide antidotes have been prepared. These antidotes reduce or eliminate damage to the crop without substantially impairing the damaging effect of the herbicide on weed species; See, for example, U.S. Patent Nos. 4 021 224 and 4 021 229 and Belgien Patent No. 846 894.

The precise mechanism by which an antidote reduces herbicidal crop injury has not been established. An antidote compound may be a remedy, interferent, protectant, or antagonist. As used herein, »antidote« describes a compound which has the effect of establishing herbicide selectivity, i.e., continued herbicidal phytotoxicity to weed species and reduced or non-phytotoxicity to cultivated crop species. The term »antidotally effective amount« describes the amount of an antidote compound which counteracts a phytotoxic response of a beneficial crop to an herbicide.

Thiocarbamate herbicides are particularly effective in the control of grassy type weeds which interfere with the cultivation of a wide variety of crops, e.g., barley, corn, lentils, peanuts, peas, potatoes, soybeans, spinach, tobacco and tomatoes. Frequently the effective use of these herbicides requires the addition of an antidote compound.

It has now been discovered that certain dinitrophenol compounds are effective antidotes for the protection of crops from thiocarbamate herbicide injury. Such compounds have the following formula:

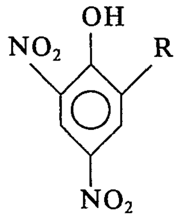

in which R is selected from the group consisting of hydrogen and lower alkyl having 1—4 carbon atoms, inclusive.

The carbon range is inclusive of both upper and lower limits. Exemplary of alkyl is methyl, ethyl, and the like.

In a preferred embodiment, R is hydrogen or methyl.

This invention also embodies a two-part herbicidal system comprised of:

(a) an herbicidally effective amount of a thiocarbamate compound of the formula

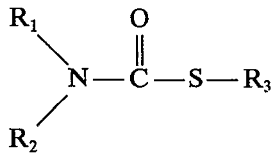

in which

$R_1$ is alkyl having 1–6 carbon atoms, inclusive;
$R_2$ is selected from the group consisting of alkyl having 1–6 carbon atoms, inclusive; and cyclohexyl; or
$R_1$ and $R_2$ form indistinguishable parts of a single alkylene ring having 4–10 carbon atoms, inclusive; and
$R_3$ is selected from the group consisting of alkyl having 1–6 carbon atoms, inclusive; haloalkyl wherein halo is selected from the group consisting of chlorine, bromine and iodine and alkyl has 1–6 carbon atoms, inclusive; alkenyl having 2–6 carbon atoms, inclusive; haloalkenyl wherein halo is selected from the group consisting of chlorine, bromine and iodine, and alkenyl has 2–6 carbon atoms, inclusive; benzyl; and halo-substituted benzyl, wherein halo is selected from the group consisting of chlorine, bromine and iodine; and

(b) a non-phytotoxic antidotally effective amount of a compound of the formula

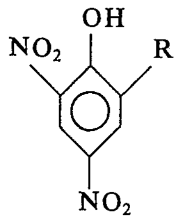

in which R is selected from the group consisting of hydrogen and lower alkyl having 1–4 carbon atoms, inclusive.

By way of exemplification, the active thiocarbamate herbicides employed in the invention may include the following: S-ethyl N,N-dipropyl thiocarbamate, S-ethyl N,N-diisobutyl thiocarbamate, S-propyl N,N-dipropyl thiocarbamate, S-propyl-N- butyl-N-ethylthiocarbamate, S-(2,3,3-tri- chloroallyl)diisopropyl thiocarbamate, S-ethyl N-ethyl N-cyclohexyl thiocarbamate, S-benzyl N,N-disec-butylthiolcarbamate, S-(4-chlorobenzyl) N,N-diethyl thiolcarbamate and combinations thereof.

This invention also includes the method of establishing herbicidal selectivity which comprises applying to the locus where protection is desired an antidotally effective amount of a compound of the formula

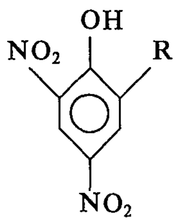

in which R is selected from the group consisting of hydrogen and lower alkyl having 1–4 carbon atoms, inclusive.

The locus where selectivity is desired may include soil, seeds, seedlings, and vegetation.

## Preparation

The thiocarbamates of the present invention are either commercially available or can be prepared by the procedures described in U.S. Patent Nos. 2 913 327; 2 983 747; 3 133 947; 3 185 720; and 3 198 786.

The dinitrophenol compounds of this invention are commercially available.

The compounds tested appear in Table I.

Table I

Dinitrophenol Compounds

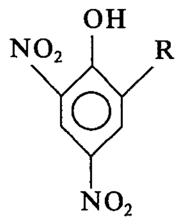

| Antidote No. | R | Chemical Name |
|---|---|---|
| 1 | H | 2,4-dinitrophenol |
| 2 | $CH_3$ | 2-methyl-4,6-dinitrophenol |

## Testing

Stock solutions of the herbicides were prepared by diluting the requisite amount of each herbicide in water. Examples of solution compositions and application rates are summarized in Table II.

Table II

Herbicide Stock Solutions

| Herbicide Name | Composition Herbicide (mg)* | Water (ml) | Application ml/flat** | lb/acre*** |
|---|---|---|---|---|
| VERNAM® 6E S-propyl-N,N-dipropyl thio-carbamate | 197 | 100 | 10 | 4 |

* The weight is measured in terms of mg of formulated herbicide. The VERNAM® 6E formulation contains 75% active herbicide compound. The weight of active herbicide compound is 148 mg.

** The flats measure 6.0 inches by 8.5 inches. Three and seven-tenths (3.7) mg/flat is equal to one (1) lb/acre.

*** 1 lb/acre = 1.12 kg/ha

In each case, the herbicide was incorporated into the soil prior to planting.

Stock solutions of each antidote compound were prepared at the desired concentrations by diluting the requisite amounts of each antidote in acetone or in a 50—50 acetone/water solution. Examples of solution compositions, rates and application methods are summarized in Table III.

Table III

Antidote Stock Solutions

Antidote: Dinitrophenols

| Composition Antidote (mg) | Acetone (ml) | Water (ml) | Application ml/flat | lb/acre | Method |
|---|---|---|---|---|---|
| 222 | 30 | 30 | 6 | 6.00 | PPI* |
| | | | | | 0.02% ST** |
| 20 | 2 | — | 0.2 ml/10 g seed — 18 seeds (about 3.6 g of seed) were planted/flat | — | |

*PPI = Pre-plant incorporation.
**ST = Seed treatment.

The antidote solutions were applied to the soil by pre-plant incorporation or by seed treatment. When the antidote was applied by pre-plant incorporation, the herbicide solution and the antidote solution were added to the soil while the soil was being mixed. When the antidote was applied by seed treatment, the herbicide solution was incorporated into the soil, the herbicide treated soil was spread in a flat and the treated seeds were planted in the soil.

Treated seeds were prepared by adding the necessary amount of an antidote stock solution to 10 g of seed in a flask. The flask was shaken to insure total seed coverage. The treated seeds were placed in Petri dishes and placed in a hood to dry. As an alternative, the seeds may be treated by adding the dinitrophenol compounds of this invention to a fungicide such as CAPTAN® or THIRAM®, and coating the seeds with the powder mixture. The seed treatment rate is shown as a percentage of the weight of antidote used per weight of seed used.

Untreated control flats contained crops which were not treated with either herbicide or antidote. Some flats contained crops treated with herbicide only. All flats were placed on greenhouse benches where temperature was maintained between 70 and 90°F (21.1 to 32.2°C). The flats were watered by sprinkling as needed to assure good plant growth.

Injury ratings were taken two to four weeks after application of the antidote. The effectiveness of the antidote was determined by visual comparison of crop injury which occurred in the test flats to that which occured in the control flats.

The soybeans screened for diminution of herbicidal injury included Bragg, Amsoy, Williams, and Corsoy varieties. The other crops included alfalfa, Ventura lima beans, Fordhook lima beans, pinto beans, kidney beans, sugar beets and tomatoes. The weed species tested included watergrass (Echinochloa crusgalli), foxtail (Setaria viridis), velvet-leaf (Abutilon theophrasti), yellow nutsedge (Cyperus esculentus) and Mustard (Brassica juncea).

Key to Tables IV and V

Antidotes in these tables correspond to the numbers and their chemical description in Table I.

Herbicides

VERNAM® – S-propyl N,N-di-propyl thiocarbamate
EPTAM® – S-ethyl N,N-di-propyl thiocarbamate
SUTAN® – S-ethyl N,N-di-isobutyl thiocarbamate
TILLAM® – S-propyl N-butyl-N-ethyl thiocarbamate

Application Methods

PPI = Pre-plant incorporation
ST = Seed treatment.

If no antidote was applied, the word »none« appears in the Antidote Rate column. The results shown on this line are the percent injuries sustained by each of the crops when treated with the herbicide only at the rate specified.

All rates shown for pre-plant incorporated herbicide or antidote are in pounds per acre. The seed treatment rate is shown as a percentage of antidote weight to seed weight.

Injury Ratings

The injury to the soybean crops (Table IV), other crops (Table V) or weeds (Table VI) is shown as a percentage of damage done to the plants as compared to the undamaged state of the plants as shown by the untreated control. The damage done to the plants is a function of the number of plants injured and the extent of injury to each plant. This rating is made two (2) to four (4) weeks after application of the herbicide alone or of the herbicide in comination with the antidote.

An asterisk (*) in Table IV or Table V indicates that the antidote compound is active in reducing herbicidal injury to the crop.

Table VI shows that the antidote compounds tested have no effect on weeds, i.e., herbicidal injury to the weeds is sustained even in the presence of an antidote compound.

Table IV

Antidotal Effectiveness

| Anti-dote No. | Herbicide | Herb. Rate | Antidote Rate | Antidote Appln. Method | Soybean Varieties Bragg % Inj | Amsoy % Inj | Williams % Inj | Corsoy % Inj |
|---|---|---|---|---|---|---|---|---|
| 1 | VERNAM | 2.00 | none | — | 50 | | 50 | |
| | VERNAM | 2.00 | 1.00 | PPI | * 5 | | * 5 | |
| | VERNAM | 2.00 | 2.00 | PPI | * 5 | | * 5 | |
| | VERNAM | 2.00 | 3.00 | PPI | * 0 | | * 0 | |
| | VERNAM | 2.00 | none | — | 50 | | 50 | |
| | VERNAM | 2.00 | 0.0025% | ST | * 5 | | *20 | |
| | VERNAM | 2.00 | 0.02% | ST | * 0 | | *10 | |
| | VERNAM | 3.00 | none | — | 30 | 40 | 45 | |
| | VERNAM | 3.00 | 1.00 | PPI | *12 | *27 | *10 | |
| | VERNAM | 3.00 | 2.00 | PPI | * 0 | * 5 | * 0 | |
| | VERNAM | 3.00 | 3.00 | PPI | * 5 | *15 | * 5 | |
| | VERNAM | 3.00 | none | — | 60 | | 60 | |
| | VERNAM | 3.00 | 0.0025% | ST | *10 | | *25 | |
| | VERNAM | 3.00 | 0.02% | ST | * 0 | | *10 | |
| | VERNAM | 4.00 | none | — | 30 | 70 | | |
| | VERNAM | 4.00 | 1.00 | PPI | *10 | 70 | | |
| | VERNAM | 4.00 | 2.00 | PPI | * 5 | *15 | | |
| | VERNAM | 4.00 | 3.00 | PPI | * 5 | *15 | | |
| | VERNAM | 4.00 | 4.00 | PPI | * 0 | * 5 | | |
| | VERNAM | 4.00 | 6.00 | PPI | *10 | *20 | | |
| | VERNAM | 4.00 | 12.00 | PPI | 100 | 100 | | |
| | VERNAM | 4.00 | none | — | 30 | 60 | 70 | |
| | VERNAM | 4.00 | 2.00 | PPI | * 5 | *10 | * 5 | |
| | VERNAM | 4.00 | none | — | 85 | 92 | | 96 |
| | VERNAM | 4.00 | 2.00 | PPI | *13 | *21 | | *26 |
| | VERNAM | 4.00 | 3.00 | PPI | * 2 | * 6 | | *13 |
| | VERNAM | 4.00 | 6.00 | PPI | * 2 | * 2 | | *10 |
| | VERNAM | 4.00 | none | — | 45 | | 55 | |
| | VERNAM | 4.00 | 0.0025% | ST | * 0 | | * 5 | |
| | VERNAM | 4.00 | 0.005% | ST | * 5 | | *10 | |
| | VERNAM | 4.00 | 0.01% | ST | *17 | | *12 | |

Table IV (Fortsetzung)

| Anti-dote No. | Herbicide | Herb. Rate | Antidote Rate | Antidote Appln. Method | Soybean Varieties Bragg % Inj | Amsoy % Inj | Williams % Inj | Corsoy % Inj |
|---|---|---|---|---|---|---|---|---|
| 1 | VERNAM | 4.00 | 0.02% | ST | * 0 | | * 0 | |
| | VERNAM | 4.00 | 0.04% | ST | 70 | | *20 | |
| | VERNAM | 4.00 | 0.08% | ST | 80 | | 90 | |
| | VERNAM | 6.00 | none | — | 71 | 93 | | 99 |
| | VERNAM | 6.00 | 2.00 | PPI | *10 | *45 | | *45 |
| | VERNAM | 6.00 | 3.00 | PPI | *12 | *41 | | *38 |
| | VERNAM | 6.00 | 4.00 | PPI | *11 | *24 | | *39 |
| | VERNAM | 6.00 | 6.00 | PPI | * 3 | *11 | | *11 |
| | EPTAM | 2.00 | none | — | 70 | | 70 | |
| | EPTAM | 2.00 | 3.00 | PPI | *25 | | *45 | |
| | EPTAM | 2.00 | 6.00 | PPI | *10 | | *40 | |
| | EPTAM | 2.00 | none | — | 70 | | 70 | |
| | EPTAM | 2.00 | 0.02% | ST | * 0 | | *30 | |
| | EPTAM | 3.00 | none | — | 60 | 80 | 80 | |
| | EPTAM | 3.00 | 2.00 | PPI | *35 | *60 | *60 | |
| | EPTAM | 3.00 | 3.00 | PPI | *45 | *55 | *55 | |
| | EPTAM | 3.00 | none | — | 75 | | 75 | |
| | EPTAM | 3.00 | 0.02% | ST | *15 | | *45 | |
| | SUTAN | 2.00 | none | — | 65 | | 60 | |
| | SUTAN | 2.00 | 3.00 | PPI | *10 | | *20 | |
| | SUTAN | 2.00 | 6.00 | PPI | * 2 | | *30 | |
| | SUTAN | 2.00 | none | — | 65 | | 60 | |
| | SUTAN | 2.00 | 0.02% | ST | * 5 | | *15 | |
| | SUTAN | 3.00 | none | — | 70 | 85 | 80 | |
| | SUTAN | 3.00 | 2.00 | PPI | *50 | *45 | *50 | |
| | SUTAN | 3.00 | 3.00 | PPI | *50 | *55 | *50 | |
| | SUTAN | 3.00 | none | — | 65 | | 55 | |
| | SUTAN | 3.00 | 0.02% | ST | *15 | | *35 | |
| 2 | VERNAM | 4.00 | none | — | 30 | 60 | 70 | |
| | VERNAM | 4.00 | 6.00 | PPI | * 0 | * 5 | * 5 | |
| | VERNAM | 4.00 | none | — | 85 | 92 | | 96 |
| | VERNAM | 4.00 | 1.00 | PPI | *13 | *42 | | *12 |
| | VERNAM | 4.00 | 2.00 | PPI | * 9 | *11 | | * 1 |
| | VERNAM | 4.00 | 3.00 | PPI | * 7 | *31 | | *23 |
| | VERNAM | 4.00 | 4.00 | PPI | * 3 | *11 | | * 2 |
| | VERNAM | 4.00 | 6.00 | PPI | * 5 | *12 | | *20 |
| | VERNAM | 4.00 | 12.00 | PPI | *64 | *80 | | 100 |
| | VERNAM | 6.00 | none | — | 71 | 93 | | 99 |
| | VERNAM | 6.00 | 2.00 | PPI | *28 | *52 | | *28 |
| | VERNAM | 6.00 | 3.00 | PPI | *17 | *49 | | * 9 |
| | VERNAM | 6.00 | 4.00 | PPI | *16 | *51 | | *16 |
| | VERNAM | 6.00 | 6.00 | PPI | *12 | *24 | | * 3 |

Table V

Antidotal Effectiveness

| Anti-dote No. | Herbicide | Herb. Rate | Antidote Appln. Rate | Anti-dote Method | Alfalfa | Ventura Lima Beans | Fordhook Lima Beans | Pinto Beans | Kidney Beans | Sugar Beets | Tom-atoes |
|---|---|---|---|---|---|---|---|---|---|---|---|
| 1 | VERNAM | 3.00 | none | — | 60 | | | | | | |
| | VERNAM | 3.00 | 1.00 | PPI | 80 | | | | | | |
| | VERNAM | 3.00 | 2.00 | PPI | *40 | | | | | | |
| | VERNAM | 3.00 | 3.00 | PPI | 70 | | | | | | |
| | EPTAM | 3.00 | none | — | 90 | | | | | | |
| | EPTAM | 3.00 | 2.00 | PPI | *80 | | | | | | |
| | EPTAM | 3.00 | 3.00 | PPI | 96 | | | | | | |
| | EPTAM | 3.00 | none | — | | 50 | 100 | 0 | 0 | 90 | 30 |
| | EPTAM | 3.00 | 2.00 | PPI | | 95 | *95 | 10 | 15 | *80 | 30 |
| | EPTAM | 3.00 | 4.00 | PPI | | 50 | *80 | 0 | 0 | * 0 | * 0 |
| | EPTAM | 3.00 | 6.00 | PPI | | 70 | *50 | 20 | 20 | * 0 | *10 |
| | EPTAM | 6.00 | none | — | | 80 | 90 | 10 | 95 | 95 | 90 |
| | EPTAM | 6.00 | 2.00 | PPI | | 80 | 90 | * 0 | * 0 | 99 | *20 |
| | EPTAM | 6.00 | 4.00 | PPI | | 80 | 90 | * 0 | * 0 | *20 | *10 |
| | EPTAM | 6.00 | 6.00 | PPI | | 100 | 100 | 20 | *20 | * 0 | *10 |
| | SUTAN | 3.00 | none | — | 75 | | | | | | |
| | SUTAN | 3.00 | 2.00 | PPI | *50 | | | | | | |
| | SUTAN | 3.00 | 3.00 | PPI | 75 | | | | | | |
| | TILLAM | 3.00 | none | — | | 50 | 30 | 0 | 0 | 60 | 10 |
| | TILLAM | 3.00 | 2.00 | PPI | | 60 | 95 | 0 | 0 | 60 | * 0 |
| | TILLAM | 3.00 | 4.00 | PPI | | *20 | 95 | 20 | 30 | * 0 | * 0 |
| | TILLAM | 3.00 | 6.00 | PPI | | 50 | *20 | 0 | 0 | * 0 | * 0 |
| | TILLAM | 6.00 | none | — | | 100 | 95 | 10 | 0 | 80 | 50 |
| | TILLAM | 6.00 | 2.00 | PPI | | *20 | *20 | 20 | 10 | * 0 | * 0 |
| | TILLAM | 6.00 | 4.00 | PPI | | *10 | * 0 | * 0 | 0 | * 0 | * 0 |
| | TILLAM | 6.00 | 6.00 | PPI | | * 0 | * 0 | * 0 | 0 | * 0 | * 0 |

Table VI

Herbicidal Effectiveness

| Antidote No. | Herbicide | Herb. Rate | Antidote Rate | Antidote Appln. Method | Water grass | Foxtail | Velvet leaf | Yellow nutsedge | Mustard |
|---|---|---|---|---|---|---|---|---|---|
| 1 | VERNAM | 2.00 | none | — | | 65 | | | |
| | VERNAM | 2.00 | 1.00 | PPI | | 65 | | | |
| | VERNAM | 2.00 | 2.00 | PPI | | 65 | | | |
| | VERNAM | 2.00 | 3.00 | PPI | | 60 | | | |
| | VERNAM | 2.00 | none | — | | 65 | | | |
| | VERNAM | 2.00 | 0.0025% | ST | | 85 | | | |
| | VERNAM | 2.00 | 0.02% | ST | | 85 | | | |
| | VERNAM | 3.00 | none | — | 95 | | | | |
| | VERNAM | 3.00 | 1.00 | PPI | 97 | | | | |
| | VERNAM | 3.00 | 2.00 | PPI | 97 | | | | |
| | VERNAM | 3.00 | 3.00 | PPI | 97 | | | | |
| | VERNAM | 3.00 | none | — | | 70 | | | |
| | VERNAM | 3.00 | 0.0025% | ST | | 75 | | | |
| | VERNAM | 3.00 | 0.02% | ST | | 80 | | | |
| | VERNAM | 4.00 | none | — | 96 | 60 | 98 | 100 | |
| | VERNAM | 4.00 | 1.00 | PPI | 96 | 90 | 97 | 100 | |
| | VERNAM | 4.00 | 2.00 | PPI | 96 | 60 | 80 | 100 | |
| | VERNAM | 4.00 | 3.00 | PPI | 96 | 90 | 96 | 99 | |
| | VERNAM | 4.00 | 4.00 | PPI | 96 | 90 | 80 | 100 | |
| | VERNAM | 4.00 | 6.00 | PPI | 96 | 90 | 90 | 100 | |
| | VERNAM | 4.00 | 12.00 | PPI | 96 | 80 | 99 | 99 | |
| | VERNAM | 4.00 | none | — | 96 | 90 | 70 | | 20 |
| | VERNAM | 4.00 | 2.00 | PPI | 96 | 95 | 95 | | 20 |
| | VERNAM | 4.00 | none | — | 90 | | | | |
| | VERNAM | 4.00 | 2.00 | PPI | 90 | | | | |
| | VERNAM | 4.00 | 3.00 | PPI | 90 | | | | |
| | VERNAM | 4.00 | 6.00 | PPI | 90 | | | | |
| | VERNAM | 6.00 | none | — | 95 | | | | |
| | VERNAM | 6.00 | 2.00 | PPI | 96 | | | | |
| | VERNAM | 6.00 | 3.00 | PPI | 95 | | | | |
| | VERNAM | 6.00 | 4.00 | PPI | 95 | | | | |
| | VERNAM | 6.00 | 6.00 | PPI | 95 | | | | |
| | EPTAM | 2.00 | none | — | | 80 | | | |
| | EPTAM | 2.00 | 3.00 | PPI | | 80 | | | |
| | EPTAM | 2.00 | 6.00 | PPI | | 90 | | | |
| | EPTAM | 2.00 | none | — | | 80 | | | |
| | EPTAM | 2.00 | 0.02% | ST | | 75 | | | |
| | EPTAM | 3.00 | none | — | 96 | | | | |
| | EPTAM | 3.00 | 2.00 | PPI | 96 | | | | |
| | EPTAM | 3.00 | 3.00 | PPI | 98 | | | | |
| | EPTAM | 3.00 | none | — | | 93 | | | |
| | EPTAM | 3.00 | 0.02% | ST | | 96 | | | |
| | SUTAN | 2.00 | none | — | | 92 | | | |
| | SUTAN | 2.00 | 3.00 | PPI | | 95 | | | |

Table VI (Fortsetzung)

| Anti-dote No. | Herbicide | Herb. Rate | Antidote Rate | Antidote Appln. Method | Water grass | Fox-tail | Velvet leaf | Yellow nutsedge | Mustard |
|---|---|---|---|---|---|---|---|---|---|
| | SUTAN | 2.00 | 6.00 | PPI | | 90 | | | |
| | SUTAN | 2.00 | none | — | | 92 | | | |
| | SUTAN | 2.00 | 0.02% | ST | | 85 | | | |
| | SUTAN | 3.00 | none | — | 80 | | | | |
| | SUTAN | 3.00 | 2.00 | PPI | 75 | | | | |
| | SUTAN | 3.00 | 3.00 | PPI | 85 | | | | |
| | SUTAN | 3.00 | none | — | | 95 | | | |
| | SUTAN | 3.00 | 0.02% | ST | | 90 | | | |
| 2 | VERNAM | 4.00 | none | — | 96 | 90 | 70 | | 20 |
| | VERNAM | 4.00 | 6.00 | PPI | 96 | 90 | 100 | | 60 |
| | VERNAM | 4.00 | none | — | 90 | | | | |
| | VERNAM | 4.00 | 1.00 | PPI | 90 | | | | |
| | VERNAM | 4.00 | 2.00 | PPI | 90 | | | | |
| | VERNAM | 4.00 | 3.00 | PPI | 90 | | | | |
| | VERNAM | 4.00 | 4.00 | PPI | 90 | | | | |
| | VERNAM | 4.00 | 6.00 | PPI | 90 | | | | |
| | VERNAM | 4.00 | 12.00 | PPI | 97 | | | | |
| | VERNAM | 6.00 | none | — | 95 | | | | |
| | VERNAM | 6.00 | 2.00 | PPI | 95 | | | | |
| | VERNAM | 6.00 | 3.00 | PPI | 95 | | | | |
| | VERNAM | 6.00 | 4.00 | PPI | 95 | | | | |
| | VERNAM | 6.00 | 6.00 | PPI | 96 | | | | |

## Test Results

The compounds of this invention show good antidotal activity for a variety of crops, especially soybean crops. Use of the antidote compounds did not result in a reduction of herbicidal injury to weeds.

## Formulations

A formulation is the incorporation of a formulant in a form which is directly usable on crops and weeds. As defined herein, a »formulant« is the material which is to be formulated. The formulant may be either an antidote compound alone or an herbicide and antidote composition. The purpose of the formulation is to apply the formulant to the locus where it is desired to establish herbicidal selectivity by a convenient method. The »locus« may include soil, seeds, seedlings and vegetation.

The formulations are commonly dusts, wettable powders, granules, solutions or emulsifiable concentrates.

Dusts are free-flowing powder compositions containing the formulant impregnated on a particulate carrier. The particle size of the carriers is usually in the approximate range of 30 to 50 microns (µm). Examples of suitable carriers are talc, bentonite, diatomaceous earth, and pyrophyllite. The composition generally contains up to 50% of formulant. Anti-caking and anti-static agents may also be added. Dusts may be applied by spraying from boom and hand sprayers on airplanes.

Wettable powders are finely divided compositions comprising a particulate carrier impregnated with the formulant and additionally containing one or more surface active agents. The surface active agent promotes rapid dispersion of the powder in an aqueous medium to form stable, sprayable suspension. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length. A list of surface active agents suitable for use in agriculture

formulations can be found in Wade Van Valkenburg, Pesticide Formulations (Marcel Dekker, Inc., N.Y., 1973) at pages 79—84.

Granules comprise the formulant impregnated on a particulate inert carrier having a particle size of about 1 to 2 millimeters (mm) in diameter. The granules can be made by spraying a solution of the formulant in a volatile solvent onto the granular carrier. Examples of suitable carriers for the preparation of granules include clay, vermiculite, sawdust, and granular carbon.

Emulsifiable concentrates consist of an oil solution of the formulant plus an emulsifying agent. Prior to use the concentrate is diluted with water to form a suspended emulsion of oil droplets. The emulsifiers used are usually a mixture of anionic and nonionic surfactants. Other additives, such as suspending agents and thickeners, may be included in the emulsifiable concentrate.

When the formulant is an antidote and herbicide composition, the proportion of antidote compound to herbicide compound generally ranges from approximately 0.001 to 30 parts by weight of the antidote compound per weight of the herbicide compound.

Formulations generally contain several additives in addition to the formulant and carrier or agent. Among these are inert ingredients, diluent carriers, organic solvents, water, oil and water, water in oil emulsion, carriers of dusts and granules, and surface active wetting, dispersing and emulsifying agents. Fertilizers, e.g., ammonium nitrate, urea and superphosphate, may be included. Aids to rooting and growth, e.g., compost, manure, humus and sand, may also be included.

As another alternative, the formulant can be applied to the soil in the form of a solution in a suitable solvent. Solvents frequently used in these formulations include kerosene, fuel oil, xylene, petroleum fractions with boiling ranges above xylene and aromatic petroleum fractions rich in methylated naphthalenes. Liquid solutions, like dusts, may be applied by spraying from boom and hand sprayers on airplanes.

## Claims

1. A composition comprising:

(a) an herbicidally effective amount of a thiocarbamate compound of the formula

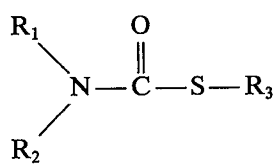

in which

$R_1$ is alkyl having 1—6 carbon atoms, inclusive;
$R_2$ is selected from the group consisting of alkyl having 1—6 carbon atoms, inclusive; and cyclohexyl; or
$R_1$ and $R_2$ form indistinguishable parts of a single alkylene ring having 4—10 carbon atoms, inclusive; and
$R_3$ is selected from the group consisting of alkyl having 1—6 carbon atoms, inclusive; haloalkyl wherein halo is selected from the group consisting of chlorine, bromine and iodine and alkyl has 1—6 carbon atoms, inclusive; alkenyl having 2—6 carbon atoms, inclusive; haloalkenyl wherein halo is selected from the group consisting of chlorine, bromine and iodine and alkenyl has 2—6 carbon atoms, inclusive; benzyl; and halo-substituted benzyl, wherein halo is selected from the group consisting of chlorine, bromine and iodine; and

(b) a non-phytotoxic antidotally effective amount of a compound of the formula

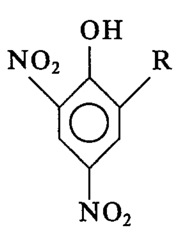

in which R is selected from the group consisting of hydrogen and lower alkyl having 1—4 carbon atoms, inclusive.

2. A composition as claimed in claim 1 characterised in that R is hydrogen.

3. A composition as claimed in claim 1 characterised in that R is methyl.

4. A composition as claimed in any of claims 1, 2 or 3 characterised in that $R_1$, $R_2$ and $R_3$ are all propyl.

5. A composition as claimed in any of claims 1, 2 or 3 characterised in that $R_1$ and $R_2$ are both propyl and $R_3$ is ethyl.

6. A composition as claimed in any of claims 1, 2 or 3 characterised in that $R_1$ and $R_2$ are both butyl and $R_3$ is ethyl.

7. A composition as claimed in any of claims 1, 2 or 3 characterised in that $R_1$ is ethyl, $R_2$ is butyl and $R_3$ is propyl.

8. A method of establishing herbicidal selectivity of the thiocarbamates of claim 1, which comprises applying to a plant seed a compound of the formula

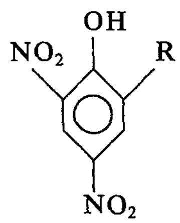

in which R is selected from the group consisting of hydrogen and lower alkyl having 1—4 carbon atoms inclusive.

9. A method as claimed in claim 8 characterised in that a compound is used wherein R is hydrogen.

10. A method as claimed in claim 8 characterised in that a compound is used wherein R is methyl.

11. A method of establishing herbicidal selectivity comprising applying to the locus where selectivity is desired a composition as claimed in any of claims 1 to 7.

**Patentansprüche**

1. Mittel, dadurch gekennzeichnet, daß es enthält:

(a) eine herbizid wirksame Menge einer Thiocarbamatverbindung der Formel

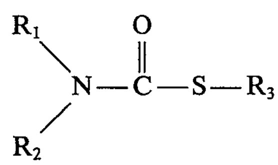

worin

$R_1$ Alkyl mit 1 bis 6 und einschließlich 6 Kohlenstoffatomen bedeutet;
$R_2$ Alkyl mit 1 bis 6 und einschließlich 6 Kohlenstoffatomen oder Cyclohexyl bedeutet; oder
$R_1$ und $R_2$ nicht unterscheidbar miteinander einen Teil eines einfachen Alkylenringes mit 4 bis 10 und einschließlich 10 Kohlenstoffatomen bedeuten; und
$R_3$ aus der Gruppe ausgewählt wird, welche enthält: Alkyl mit 1 bis 6 und einschließlich 6 Kohlenstoffatomen; Halogenalkyl, worin Halogen aus der Gruppe Chlor, Brom und Jod ausgewählt ist, und Alkyl mit 1 bis 6 und einschließlich 6 Kohlenstoffatomen; Alkenyl mit 2 bis 6 und einschließlich 6 Kohlenstoffatomen; Halogenalkenyl, worin Halogen aus der Gruppe Chlor, Brom und Jod ausgewählt ist, und Alkenyl mit 2 bis 6 und einschließlich 6 Kohlenstoffatomen; Benzyl; und halogensubstituiertes Benzyl, worin Halogen aus Chlor, Brom und Jod ausgewählt ist; und

(b) eine nichtphytotoxische als Antidot wirksame Menge einer Verbindung der Formel

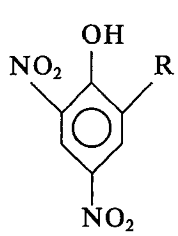

worin R Wasserstoff oder eine Niedrigalkylgruppe mit 1 bis 4 und einschließlich 4 Kohlenstoffatomen bedeutet.

2. Mittel nach Anspruch 1, dadurch gekennzeichnet, daß R Wasserstoff bedeutet.
3. Mittel nach Anspruch 1, dadurch gekennzeichnet, daß R Methyl bedeutet.
4. Mittel nach Anspruch 1, 2 oder 3, dadurch gekennzeichnet, daß $R_1$, $R_2$ und $R_3$ alle Propyl bedeuten.
5. Mittel nach Anspruch 1, 2 oder 3, dadurch gekennzeichnet, daß $R_1$ und $R_2$ beide Propyl und $R_3$ Ethyl bedeuten.
6. Mittel nach Anspruch 1, 2 oder 3, dadurch gekennzeichnet, daß $R_1$ und $R_2$ beide Butyl bedeuten und $R_3$ Ethyl bedeutet.
7. Mittel nach Anspruch 1, 2 oder 3, dadurch gekennzeichnet, daß $R_1$ Ethyl, $R_2$ Butyl und $R_3$ Propyl bedeuten.
8. Verfahren zur Erzeugung einer herbiziden Selektivität der Thiocarbamate nach Anspruch 1, dadurch gekennzeichnet, daß man auf den Samen einer Pflanze eine Verbindung der Formel

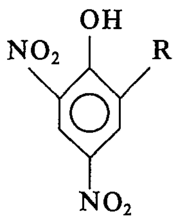

aufbringt, worin R Wasserstoff oder eine Niedrigalkylgruppe mit 1 bis 4 und einschließlich 4 Kohlenstoffatomen bedeutet.
9. Verfahren nach Anspruch 8, dadurch gekennzeichnet, daß eine Verbindung verwendet wird, worin R Wasserstoff bedeutet.
10. Verfahren nach Anspruch 8, dadurch gekennzeichnet, daß eine Verbindung verwendet wird, worin R Methyl bedeutet.
11. Verfahren zur Erzeugung einer herbiziden Selektivität, dadurch gekennzeichnet, daß man auf den Ort, wo die Selektivität gewünscht wird, ein Mittel nach einem der Ansprüche 1 bis 7 aufbringt.

**Revendications**

1. Une composition comprenant:

(a) une quantité efficace en tant qu'herbicide d'un dérivé de thiocarbamate de formule

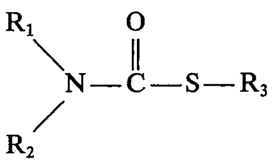

dans laquelle:

$R_1$ est un alkyle possédant de 1 à 6 atomes de carbone, bornes comprises;
$R_2$ est choisi dans le groupe constitué par un alkyle possédant 1 à 6 atomes de carbone, bornes comprises, et le cyclohexyle; ou
$R_1$ et $R_2$ forment des parties indistinctes d'un cycle alkylène unique possédant de 4 à 10 atomes de carbone, bornes comprises; et
$R_3$ est choisi dans le groupe constitué par un alkyle possédant 1 à 6 atomes de carbone, bornes comprises; un haloalkyle dans lequel l'halogène est choisi dans le groupe constitué par le chlore, le brome et l'iode et l'alkyle possède de 1 à 6 atomes de carbone, bornes comprises; un alkényle possédant de 2 à 6 atomes de carbone, bornes comprises; un haloalkényle dans lequel l'halogène est choisi dans le groupe constitué par le chlore, le brome et l'iode et l'alkényle possède de 2 à 6 atomes de carbone, bornes comprises; le benzyle; et le benzyl-halo-substitué dans lequel l'halogène est choisi dans le groupe constitué par le chlore, le brome et l'iode; et

(b) une quantité efficace en tant qu'antidote non phytotoxique d'un composé de formule

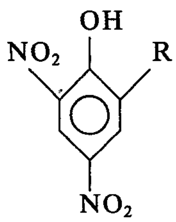

dans laquelle:

R est choisi dans le groupe constitué par l'hydrogène et un alkyle inférieur possédant de 1 à 4 atomes de carbone, bornes comprises.

2. Composition selon la revendication 1, caractérisée en ce que R est l'hydrogène.

3. Composition suivant la revendication 1, caractérisée en ce que R est le méthyle.

4. Composition suivant l'une quelconque des revendications 1, 2 ou 3, caractérisée en ce que $R_1$, $R_2$ et $R_3$ sont tous des propyles.

5. Composition suivant l'une quelconque des revendications 1, 2 ou 3, caractérisée en ce que $R_1$ et $R_2$ sont tous les deux des propyles et $R_3$ représente un éthyle.

6. Composition suivant l'une quelconque des revendications 1, 2 ou 3, caractérisée en ce que $R_1$ et $R_2$ sont tous les deux des butyles, et $R_3$ représente un éethyle.

7. Composition suivant l'une quelconque des revendications 1, 2 ou 3, caractérisée en ce que $R_1$ est un éthyle, $R_2$ est un butyle et $R_3$ est un propyle.

8. Méthode de création d'une sélectivité herbicide des thiocarbamates suivant la revendication 1, caractérisée en ce que l'on applique à une plante un composé de formule:

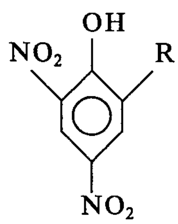

dans laquelle:

R est choisi dans le groupe constitué par l'hydrogène et un alkyle inférieur possédant de 1 à 4 atomes de carbone, bornes comprises.

9. Procédé suivant la revendication 8, caractérisé en ce que l'on utilise un composé dans lequel R représente un hydrogène.

10. Procédé suivant la revendication 8, caractérisé en ce que l'on utilise un composé dans lequel R est un méthyle.

11. Procédé de création d'une sélectivité herbicide, caractérisé en ce que l'on applique au lieu où la sélectivité est désirée, une composition telle que revendiquée dans l'une quelconque des revendications 1 à 7.